# EUROPEAN PATENT APPLICATION

(11) **EP 4 393 632 A1**
(43) Date of publication of application: **03.07.2024**
(21) Application number: 22869783.5
(22) Date of filing: 25.08.2022
(51) Int. Cl.: B23K 26/21, B23K 26/32

(54) **LASER WELDING METHOD FOR SI-CONTAINING STEEL SHEETS**

(30) Priority: 15.09.2021 JP 2021150287
(71) Applicant: JFE Steel Corporation, Tokyo 100-0011 (JP)
(72) Inventor: HARA Asato, Tokyo 100-0011 (JP); KITANI Yasushi, Tokyo 100-0011 (JP)
(74) Representative: Grünecker Patent- und Rechtsanwälte PartG mbB
(86) International application number: PCT/JP2022/032037
(87) International publication number: WO 2023/042636

(57) **Abstract**

A laser welding method including butting Si-containing steel sheets and irradiating a gap between the butted steel sheets with a laser beam while feeding a filler wire to the gap thereby melting and solidifying the filler wire and the butted steel sheets to form a weld metal, and thus joining the butted steel sheets together, in which an austenitic wire is used as the filler wire, the width of the gap is set to 0.30 mm or more, and the amount of the filler wire fed to the gap per unit welding length is set within the range of 1.5 to 2.5 times the volume of the gap per unit length, so that a weld metal with an austenite structure is stably obtained. Preferably, the base metal dilution ratio of the weld metal is set to 70% or less to allow the weld metal to have a maximum hardness in the Vickers hardness HV0.2, of 250 or less.

## Description

### Technical Field

The present invention relates to a laser welding method for Si-containing steel sheets, more specifically, to a laser welding method used to butt-join the rear end portion of the preceding steel sheet and the front end portion of the succeeding steel sheet at the entry side of a line for continuously processing Si-containing steel sheets.

### Background Art

In recent years, it has become common practice in the steel industry, in facilities for producing a steel sheet including a steel sheet in a hot rolling mill, pickling facility, cold rolling mill, or annealing facility for producing a steel sheet, to continuously process a steel sheet that has been wound into coils by unwinding the steel sheet. In a production line for continuously processing such steel sheets, the rear end portion of the preceding steel sheet and the front end portion of the succeeding steel sheet are butt-welded to be joined together at the entry side of the line so that the target steel sheets to be processed can be threaded through the line without gaps. Flash butt welding or laser welding is commonly often used to weld such steel sheets. In particular, laser welding is often used to weld steel sheets including electromagnetic steel sheets and stainless steel sheets that are hard and have low toughness.

However, in laser welding, the weld is rapidly cooled to harden after welding, causing a problem in that sufficient toughness cannot be secured. In particular, a steel sheet with a high Si content causes more embrittlement at the weld as the Si content increases. Therefore, the weld resulting from laser welding of Si-containing steel sheets is likely to fracture while the steel sheets are threaded through a continuous processing line. Such a fracture caused while being threaded through a line would take a long time to restore the original condition, significantly reducing the working rate as well as productivity. Further, the fracture would damage a roll in a rolling mill, for example, and require the roll to be replaced. This would not only reduce productivity but also increase the consumption rate of a roll.

To solve such problems, it has been common practice to feed a filler wire with a low Si content such as a low-carbon ferritic filler wire containing approximately 0.08 mass% C and approximately 0.5 mass% Si, for example, YGW12 as defined by JIS Z 3312(2009), into the weld. The purpose of this is to dilute the Si concentration in the weld metal, thereby reducing the hardenability and preventing the weld metal from having a martensite structure.

However, when welding steel sheets each containing 1.0 mass% or more Si, the dilution of the Si concentration may not be sufficient if the amount of the filler fed is insufficient. In such a case, the weld metal is likely to form a_martensite structure, which may fail to prevent the weld from fracturing when the steel sheet is threaded through a continuous processing line.

To deal with this situation, Patent Literature 1 proposes a method of feeding a filler containing Ni as the main component into a joint in laser welding of Si-containing steel sheets to control the Ni content in the resulting weld metal within an appropriate range, thereby obtaining a weld joint with excellent toughness of both the weld metal and the heat-affected zone. This method can prevent the embrittlement of the weld. It can also prevent the formation of coarse ferrite grains in the weld metal, which would lead to deteriorated mechanical properties and coarsening of the crystal grains of the heat-affected zone, which would be prone to fracture. Patent Literature 1 also shows that it is necessary to set the hardness of the weld metal to 350 or less in the Vickers hardness as defined by JIS Z 2244 to prevent the fracture in the weld.

### Citation List

### Patent Literature

Patent Literature 1: JP-H05-305466A

### Summary of Invention

### Technical Problem

However, even when the method of Patent Literature 1 is applied, the maximum hardness of the weld metal may exceed 350 in HV0.2. Therefore, at present, it is impossible to completely prevent the fracture at the weld when the steel sheet is threaded through the continuous processing line.

The present invention has been made in view of the above problems of the conventional method, and it is an object of the present invention to provide a laser welding method which can reduce the maximum hardness of the weld more stably than with the conventional method.

### Solution to Problem

To solve the above problems of the conventional method, the present inventors have conducted intensive studies, focusing on the conditions of feeding a filler wire to the weld. As a result, the inventors have found that the method described in Patent Literature 1 cannot stably reduce the maximum hardness of the weld metal to 350 or less in HV0.2, mainly because the weld metal has not been reliably formed into an austenite structure due to insufficient feeding of the filler wire, or excessive melting of base metal. Accordingly, the present inventors have also found that, to solve the above problem, it is effective to use an austenitic filler wire as the filler wire and secure a predetermined width or more as the gap between the butted steel sheets, thereby allowing the amount (i.e., volume) of the filler wire fed to the gap per unit welding length to have a predetermined proportion to the volume of the gap between the steel sheets per unit length. Thus, the present inventors have arrived at the present invention.

Based on the above findings, the present invention proposes a laser welding method for Si-containing steel sheets. The laser welding method includes butting the Si-containing steel sheets and feeding a filler wire to a gap between the butted steel sheets while irradiating a laser beam thereto so that the filler wire and the butted steel sheets are melted and solidified to form weld metal, in which the weld metal has an austenite structure by using an austenitic wire as the filler wire, setting a width of the gap to be 0.30 mm or more, and setting an amount (volume) of the filler wire fed to the gap per unit welding length within a range of 1.5 to 2.5 times a volume of the gap per unit length.

In the laser welding method of the present invention, the weld metal has a maximum hardness of 250 or less and a minimum hardness of 150 or more, both in Vickers hardness HV0.2, by setting a base metal dilution ratio of the weld metal to be 70% or less. It should be noted that the base metal dilution ratio is the volume ratio of the base metal with respect to the entire weld metal.

In the laser welding method of the present invention, a ratio (f/a) of a height f of a bead formed on the back surface of a resulting weld to a thickness a of the steel sheets is set in the range of 0 to 0.20.

In the laser welding method of the present invention, a filler wire having an Ni equivalent of 50% or more and a Cr equivalent of 20% or more on a Sheafflar diagram is used as the filler wire.

In the laser welding method of the present invention, the filler wire has an ingredient composition in accordance with NCF625 defined by JIS G 4901.

In the laser welding method of the present invention, the Si-containing steel sheets contain 1.0 mass% or more Si.

### Advantageous Effects of Invention

According to the present invention, when performing laser welding of Si-containing steel sheets by butting the steel sheets, an austenitic filler wire is used as a filler wire, and the gap between the butted steel sheets is secured to have a predetermined width or more so that the amount of the filler wire fed to the gap is set in an appropriate range with respect to the volume of the gap. This allows the weld metal to stably have an austenite structure even for a steel sheet containing 1.0 mass% or more Si. Further, by setting the base metal dilution ratio of the weld metal to 70% or less, the maximum hardness of the weld metal can be stably reduced to 250 or less in HV0.2. Thus, according to the present invention, the occurrence of the fracture in the weld can be almost completely prevented when the steel sheets are threaded through a continuous processing line, thereby greatly contributing to improving productivity.

### Brief Description of Drawings

FIG. 1 is a schematic view showing an example of a laser welding machine used in the present invention.
FIG. 2 is a view showing the height f of a bead on the back surface of a weld metal M formed in a weld.
FIG. 3 is a view showing the volume V of a gap formed between steel sheets to be welded.
FIG. 4 is a graph showing the influence of (the feeding amount of a filler wire / the volume of the gap between the steel sheets) on the maximum hardness of the weld metal and the height of the bead on the back surface.
FIG. 5 is a graph showing the results of comparing the rates of occurrence of the fracture when cold rolling is performed on a weld obtained by the conventional laser welding method and when cold rolling is performed on a weld obtained by the laser welding method of the present invention.

### Description of Embodiments

The present invention provides a technique relating to a laser welding method that includes, when threading Si-containing steel sheets through a continuous processing line, butting the rear end portion of the preceding steel sheet and the front end portion of the succeeding steel sheet at the entry side of the line, and irradiating the gap between the butted portions of the steel sheets with a laser beam while feeding a filler wire to the gap, thereby melting and solidifying the filler and the butted steel sheets, thus to join the preceding and succeeding steel sheets.

Herein, the Si-containing steel sheet refers to a steel sheet containing 1.0 mass% or more Si, and may be either a hot-rolled steel sheet or a cold-rolled steel sheet. However, to obtain more advantageous effects of the present invention, the Si-containing steel sheet preferably contains 3.0 mass% or more Si, which causes significant fracture in the weld. Note that the upper limit of the Si content is not specifically limited, but is preferably about 4.5 mass%, from the viewpoint of securing the cold-rolling property. Moreover, the steel sheet is preferable to have a thickness in the range of 0.8 to 4.0 mm. When the thickness is less than 0.8 mm, the steel sheet is melted in a small amount, and the weld may be melted down, resulting in the steel sheets being difficult to weld. Meanwhile, when the thickness exceeds 4.0 mm, it would be necessary to increase the laser output to melt the steel sheet including the back surface, which causes a large amount of the steel sheet to be melted. This makes it difficult to control the base metal dilution ratio to 70% or less.

The continuous processing line refers to a line for continuously processing the Si-containing steel sheets, and may be any continuous processing line for processing the Si-containing steel sheets by laser-welding the rear end of the preceding steel sheet and the front end of the succeeding steel sheet together on the entry side of the line in a hot rolling facility, a pickling facility, a cold rolling facility, a cleaning facility, a continuous annealing facility, a temper rolling facility, or a refining facility, for example.

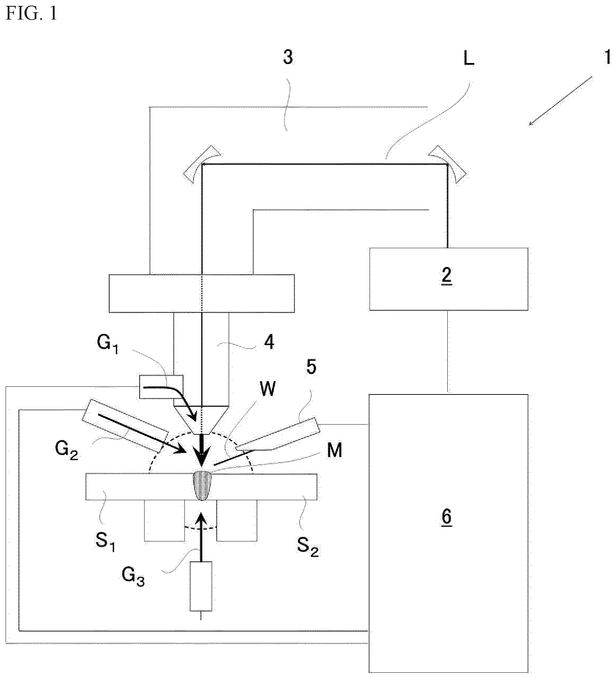

Next, a laser welding machine used for the laser welding method of the present invention will be described. FIG. 1 shows an example of a laser welding machine that can be used for the laser welding method of the present invention and that is installed at the entry side of a line for continuously processing Si-containing steel sheets. The laser welding machine 1 includes: a laser irradiation unit that guides a laser beam L oscillated from a laser oscillator 2 to a condenser (i.e., a condenser lens) 4 via a light guide path 3 to condense the laser beam with the condenser lens 4 and then irradiates the butted portion of the preceding steel sheet S₁ and the succeeding steel sheet S₂ with the laser beam; a filler wire feeding device 5 that feeds a filler wire W to the butted portion; a shielding gas jetting device that jets a shielding gas to the front and back surfaces of the butted portion to shield the butted portion; and a control unit 6 that controls each unit constituting the laser irradiation unit, the filler wire feeding device 5, and the shielding gas jetting device in the welding machine 1 by using an arithmetic processing unit, such as a CPU, that executes a process program. The filler wire W and the two steel sheets S₁ and S₂ are melted by the laser beam L irradiated onto the butted portion and solidified to form a weld M around the butted portion. The weld includes a weld metal formed as a result of the melting of the filler wire and the steel sheets, and a heat-affected zone around the weld metal. Note also that FIG. 1 shows the weld metal only.

The shielding gas jetting device is to prevent the oxidation of the weld, or to prevent the reduction of the thermal energy to be supplied to the material due to plasma generated by the separation of metal vapor and gas present in the laser irradiation unit. FIG. 1 shows that the shielding gas jetting device includes a device that jets center gas G1 to the front surface side of the butted portion of the steel sheets, a device that jets side gas G2 to the front surface side of the butted portions from their side surface, and a device that jets back gas G3 to the back surface side of the butted portions, coaxially with the laser beam L. The control unit 6 controls the composition and the amount of the shielding gas to be jetted from each device.

Although FIG. 1 shows a configuration example of a welding machine using a carbon dioxide gas laser as a laser for welding, the present invention is not limited thereto, and may use, for example, a disk laser or a fiber laser. When a disk laser, a fiber laser, or a YAG laser is used, the center gas G₁ is not required because the wavelengths of these laser beams are short and plasma is unlikely to be generated. Moreover, He gas is more preferably used as the shielding gas over Ar gas because He gas has a higher ionization voltage and is less likely to generate plasma.

Next, the laser welding method of the present invention using the foregoing laser welding machine will be described.

In laser welding of Si-containing steel sheets, especially those containing 1.0 mass% or more Si, conventional methods have been used to prevent the fracture when the steel sheets are threaded through a continuous processing line by feeding a low-carbon, low-silicon ferritic filler wire to the weld, which dilutes the Si concentration in the resulting weld metal and lowers the hardenability. However, these methods cannot sufficiently dilute the Si concentration if the feeding filler wire is unstable, failing to prevent a fracture.

To address the problem, Patent Literature 1 proposes a method in which an austenitic filler wire mainly composed of Ni is used, instead of the ferritic filler wire. Although this method allows the resulting weld metal to have a maximum hardness of 350 or less in HV0.2 and thus can reduce the fracture in the weld to some extent, compared with the conventional method, the fracture still frequently occurs in the weld due to a large amount of variation.

Accordingly, the present inventors have made intensive studies on the welding conditions for stably reducing the maximum hardness of the weld metal to 350 or less in the Vickers hardness HV0.2, by using an austenitic filler wire, which is different from the filler wire of Patent Literature 1 described, of NCF625 defined by JIS G 4901 (Fe: 5 mass% or less, C: 0.10 mass% or less, Si: 0.50 mass% or less, Mn: 0.5 mass% or less, P: 0.015 mass% or less, S: 0.015 mass% or less, Ni: 58.00 mass% or more, Cr: 20.00 to 23.00 mass%, Mo: 8.00 to 10.00 mass%, Ti: 0.4 mass% or less, Al: 0.4 mass% or less, and Nb + Ta: 3.15 to 4.15 mass%), as the filler wire.

As a result, the present inventors have found that, when steel sheets are butt-welded, the resulting weld metal can stably have an austenite structure by setting the width of the gap formed between the butted steel sheets to be 0.30 mm or more, and setting the amount (i.e., volume) of the austenitic filler wire fed to the weld per unit welding length to be in the range of 1.5 to 2.5 times the volume of the gap formed between the butted steel sheets per unit length. Herein, the austenite structure of the present invention refers to a structure that has ferrite by 10% or less, that is, has austenite by 90% or more, even when the structure is a single-phase structure of austenite or a mixed-phase structure of austenite and ferrite, the amount of ferrite. Note that the preferable amount of ferrite is 5 vol% or less. When the above conditions are satisfied, the maximum hardness of the resulting weld metal can be reduced to 300 or less in the Vickers hardness HV0.2. It should be noted that in the present invention, the ratio of the amount (i.e., volume) of the filler wire fed to the weld per unit welding length with respect to the volume of the gap formed between the butted steel sheets per unit length is also referred to as a "filler wire feeding amount ratio."

The reason for setting the width of the gap formed between the butted steel sheets to be 0.30 mm or more is as follows. When the width is less than 0.30 mm, the base metal dilution ratio described below cannot be reduced to 70% or less because the steel sheets melt in large amounts during welding. This prevents the resulting weld metal from having an austenite structure, failing to stably reduce the hardness of the weld metal to 250 in HV0.2. Note that the upper limit of the width of the gap between the butted steel sheets is preferably about 0.90 mm. If the width of the gap is more than 0.90 mm, the filler wire and the steel sheets that have melted are not welded together but melt down instead, resulting in welding failure.

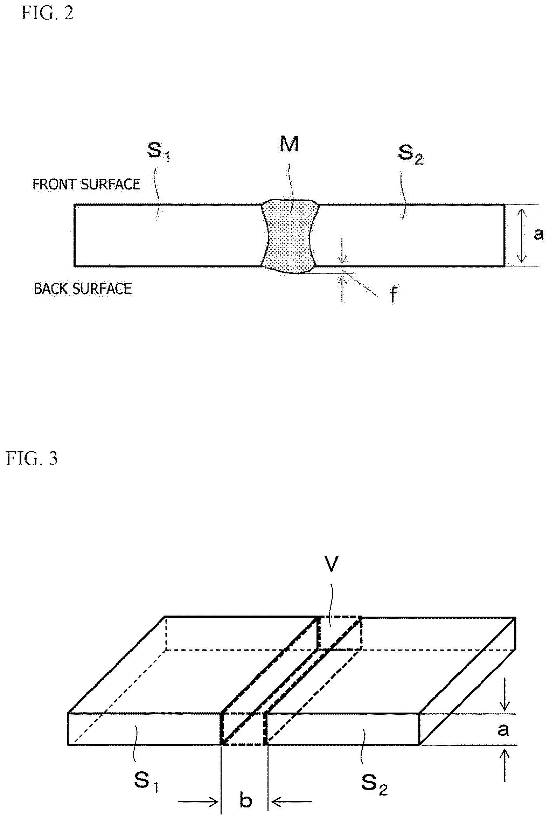

The reason for setting the filler wire feeding amount ratio within the range of 1.5 to 2.5 is that the resulting weld metal cannot stably have an austenite structure with a ratio of less than 1.5. Meanwhile, when the filler wire feeding amount ratio exceeds 2.5, the ratio (f/a) of the height (indicated by f in FIG. 2) of a bead formed on the back surface of the resulting weld to the thickness a of the steel sheets exceeds 0.20, thereby adversely affecting the threading properties of the steel sheets to the continuous processing line. It should be noted that a welding machine equipped with a bead grinder is not preferably used because it is not necessary to define the upper limit of the feeding amount ratio but the wire cost increases. The preferable filler wire feeding amount ratio is in the range of 1.7 to 2.2.

The gap formed between the butted steel sheets refers to the gap formed between the preceding steel sheet S₁ and the succeeding steel sheet S₂, as shown in FIG. 3. The volume V of the gap per unit length is (b × a). Note that when the thickness of the preceding steel sheet S₁ is different from the thickness of the succeeding steel sheet S₂, the average thickness of the steel sheets S₁ and S₂ is determined as the thickness a.

The amount (i.e., volume) of the filler wire fed to the weld per unit welding length is controlled by the control unit 6 shown in FIG. 1, based on the welding rate and the width (indicated by b in FIG. 3) of the gap formed between the weld of the butted steel sheets. In other words, the control unit 6 calculates the feeding amount of the filler wire per unit welding length based on the welding rate, the volume V of the gap per unit length, which has been calculated based on the thickness a of the steel sheets to be welded and the width b of the gap between the butted steel sheets, and a preset filler wire feeding amount ratio. Note that the width b of the gap may be either a preset gap value or the measured value.

The upper limit value of (f/a) is preferably 0.20, while the lower limit value thereof is preferably 0 or more. When the lower limit value is less than 0, the weld is in an underfilled state, which may cause the fracture in the threading of the steel sheets through the line. When the upper limit value exceeds 0.20, the projecting portion is crushed upon contact with a roll when the steel sheets are threaded through the line after welding, or may be defective in the form of a dent, and thus can become the starting point of the fracture. The preferable range of (f/a) is 0 to 0.10.

In addition to the foregoing welding conditions, setting the base metal dilution ratio of the weld metal to 70% or less allows the weld metal to stably achieve a maximum hardness of 250 or less in the Vickers hardness HV0.2, which is significantly lower than the maximum hardness of the method of Patent Literature 1. When the base metal dilution ratio of the weld metal exceeds 70%, it is difficult for the weld metal to reliably have a maximum hardness of 250 or less in HV0.2. It should be noted that the base metal dilution ratio of the weld metal refers to the volume ratio of the base metal with respect to the whole weld metal including the base metal and the filler wire. The more preferable base metal dilution ratio is 65% or less.

In the present invention, the filler wire fed to the weld is required to be an austenitic wire. The austenitic wire is preferably to have, on a Sheafflar diagram, a Ni equivalent (= Ni (mass%) + 30 × C (mass%) + 0.5 × Mn (mass%)) in the range of 50 to 80%, and a Cr equivalent (= Cr (mass%) + Mo (mass%) + 1.5 × Si (mass%) + 0.5 × Nb (mass%)) in the range of 20 to 40% from the viewpoint of allowing the resulting weld metal to stably have an austenite structure. More preferably, the Ni equivalent is in the range of 60 to 70%, and the Cr equivalent is in the range of 25 to 35%. A filler wire that satisfies the above conditions can allow the resulting weld metal to reliably have an austenite structure as long as the mixing ratio of the base metal and the filler wire, i.e., the base metal dilution ratio of the weld metal is 70% or less.

Examples of the austenitic filler wires that meet the above component conditions include NCF625, NCF601, NCF690, and NCF718 defined by JIS G 4901 (1999). However, other austenitic filler wires outside the above JIS standards can be used as long as they satisfy the Ni equivalent and Cr equivalent conditions.

By using the above laser welding method of the present invention, the base metal dilution ratio of the weld metal can be reduced to 70% or less, thus allowing the weld metal to be formed at the weld to stably have an austenite structure with a maximum hardness of 250 or less in HV0.2. This can further improve the toughness of the weld, significantly preventing the fracture when the steel sheets are threaded through a continuous line.

Although only the maximum hardness of the weld metal is defined above, the lower limit value (i.e., the minimum hardness) of the weld metal is preferably 150 in HV0.2. If the minimum hardness of the weld metal is less than 150, the strength of the weld metal itself will be insufficient, which would rather cause the fracture in welding. Herein, the maximum hardness and the minimum hardness are obtained by measuring the thickness of a cross section of the weld metal, and the Vickers hardness HV0.2 of each of five points including the center point of the weld width and four points 0.4 mm away from the center point in the up, down, right, and left directions, and determining the maximum value as the maximum hardness and the minimum value as the minimum hardness.

### Example 1

Experiments were conducted to butt-weld hot-rolled electrical steel sheets with thicknesses of 1.5 mm, 2.2 mm, or 3.0 mm, and containing 3 mass% of Si using the laser welding machine installed at the entry side of a continuous cold rolling line shown in FIG.1. A carbon dioxide gas laser was used as a laser for the welding experiments, and other experimental elements including the laser output and the welding rate were varied as shown in Table 1. A ferritic filler wire, YGW12 defined by JIS Z 3314 (2009) and an austenitic filler wire, NCF625 and NCF601 defined by JIS G 4901 (1999) were used, as the filler wire fed to the weld. The feeding amounts of these filler wires were varied as shown in Table 1.

Test specimens including the weld were taken out from the butted weld to conduct the following evaluation.

### <Structure of weld metal>

A cross section of the weld metal, which had been cut along a direction crossing the weld, was polished with #1500 emery paper and then etched with an aqueous solution of oxalic acid to reveal the metal structure. Then, the metal structure was observed by EBSD to measure the area ratio, i.e., the volume ratio (vol%) of austenite or ferrite of the weld metal.

### <Maximum hardness of weld metal>

The thickness of the cross section of the weld metal, which had been cut along a direction crossing the weld, and the Vickers hardness HV0.2 of each of five points including the center point of the weld width and four points 0.4 mm away from the center point in the up, down, right, and left directions were measured. Among the measured values, the maximum value of the Vickers hardness was determined as the maximum hardness, and the minimum value of the Vickers hardness was determined as the minimum hardness.

### <Height of bead on back surface of weld>

The weld was cut along a direction crossing it, and the height (indicated by f in FIG. 2) of a bead on the back surface formed in the weld was measured to determine the ratio (f/a) of the height f of the bead to the thickness a of the steel sheets.

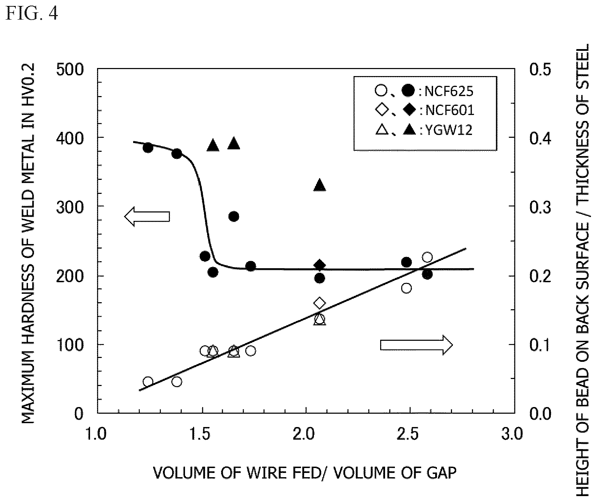

Table 1 also shows the measurement results. FIG. 4 shows the influence of the filler wire feeding amount ratio on the maximum hardness of the weld metal and the height of the bead on the back surface, based on the results of Table 1.

As can be seen from Table 1 and FIG. 4, the weld metal can stably have an austenite structure by performing laser welding satisfying the conditions in accordance with the present invention. Furthermore, the maximum hardness of the weld metal can be stably reduced to 250 or less in HV0.2 by setting the base metal dilution ratio of the weld metal to 70% or less. In contrast, when a low-carbon ferritic steel wire is used as the filler wire, the maximum hardness of the weld metal is well above 250 in HV0.2 even when the feeding amount of the wire is within the appropriate range of the present invention. It is also found that, even with the use of an austenitic filler wire, it would be impossible to reduce the maximum hardness of the weld metal to 250 or less in HV0.2 if the filler wire feeding amount ratio is less than 1.5. Meanwhile, if the filler wire feeding amount ratio exceeds 2.5, the ratio of the height of the bead on the back surface to the thickness of the steel sheets exceeds 0.20, which may adversely affect the threading properties of the steel sheet through the line. Furthermore, with the width b of the gap between the butted steel sheets set to 0.25 mm, the base metal dilution ratio cannot be reduced to 70% or less even if the austenitic filler wire feeding amount ratio is controlled to be in the range of 1.5 to 2.5, and thus, the maximum hardness of the weld metal is above 250 in HV0.2.

**Table 1**

| Experiment No. | Steel sheet thickness a (mm) | Gap width b at weld (mm) | Laser irradiation conditions | | Filler wire | | | | Properties of weld | | | | | | Remarks |
|---|---|---|---|---|---|---|---|---|---|---|---|---|---|---|---|
| | | | Output (kW) | Welding rate c (m/min) | Wire type | Wire diameter d (mm) | Feeding rate e (m/min) | Wire feeding amount /volume of gap between sheets | Base metal dilution ratio (%) | y phase of weld metal (vol%) | Maximum hardness of weld metal in HV0.2 | Minimum hardness of weld metal in HV0.2 | Height f of bead on back surface (mm) | (f/a) | |
| 1 | 2.2 | 0.50 | 12 | 2.8 | NCF625 | 0.9 | 6.0 | 1.24 | 81 | 13 | 386 | 313 | 0.1 | 0.05 | Comparative Example |
| 2 | 2.2 | 0.30 | 8 | 2.8 | NCF625 | 0.9 | 4.0 | 1.38 | 78 | 18 | 377 | 318 | 0.1 | 0.05 | Comparative Example |
| 3 | 2.2 | 0.30 | 8 | 2.8 | NCF625 | 0.9 | 4.4 | 1.51 | 67 | 91 | 228 | 193 | 0.2 | 0.09 | Invention Example |
| 4 | 2.2 | 0.30 | 8 | 2.8 | NCF625 | 0.9 | 4.5 | 1.55 | 65 | 93 | 205 | 191 | 0.2 | 0.09 | Invention Example |
| 5 | 2.2 | 0.30 | 8 | 2.8 | YGW12 | 0.9 | 4.5 | 1.55 | 82 | 0 | 391 | 350 | 0.2 | 0.09 | Comparative Example |
| 6 | 2.2 | 0.25 | 8 | 2.8 | NCF625 | 0.9 | 4.0 | 1.65 | 77 | 21 | 286 | 224 | 0.2 | 0.09 | Comparative Example |
| 7 | 2.2 | 0.25 | 8 | 2.8 | YGW12 | 0.9 | 4.0 | 1.65 | 77 | 0 | 393 | 305 | 0.2 | 0.09 | Comparative Example |
| 8 | 2.2 | 0.50 | 10 | 2.0 | NCF625 | 0.9 | 6.0 | 1.73 | 69 | 90 | 214 | 192 | 0.2 | 0.09 | Invention Example |
| 9 | 2.2 | 0.30 | 10 | 2.8 | NCF625 | 0.9 | 6.0 | 2.06 | 58 | 97 | 197 | 190 | 0.3 | 0.14 | Invention Example |
| 10 | 2.2 | 0.30 | 10 | 2.8 | NCF601 | 0.9 | 6.0 | 2.06 | 61 | 96 | 205 | 183 | 0.3 | 0.14 | Invention Example |
| 11 | 2.2 | 0.30 | 10 | 2.8 | YGW12 | 0.9 | 6.0 | 2.06 | 60 | 0 | 332 | 280 | 0.3 | 0.14 | Comparative Example |
| 12 | 2.2 | 0.30 | 12 | 2.8 | NCF625 | 0.9 | 7.2 | 2.48 | 53 | 98 | 220 | 168 | 0.4 | 0.18 | Invention Example |
| 13 | 2.2 | 0.30 | 12 | 2.8 | NCF625 | 0.9 | 7.5 | 2.58 | 48 | 99 | 202 | 169 | 0.5 | 0.23 | Comparative Example |
| 14 | 1.5 | 0.30 | 8 | 4.0 | NCF625 | 0.9 | 4.0 | 1.41 | 81 | 11 | 358 | 166 | 0.1 | 0.07 | Comparative Example |
| 15 | 1.5 | 0.30 | 8 | 4.0 | NCF625 | 0.9 | 4.5 | 1.59 | 61 | 94 | 210 | 184 | 0.1 | 0.07 | Invention Example |
| 16 | 1.5 | 0.30 | 8 | 3.5 | NCF625 | 0.9 | 6.0 | 2.42 | 58 | 98 | 202 | 180 | 0.2 | 0.13 | Invention Example |
| 17 | 1.5 | 0.30 | 8 | 3.5 | NCF625 | 0.9 | 6.5 | 2.62 | 44 | 99 | 199 | 168 | 0.4 | 0.27 | Comparative Example |
| 18 | 3.0 | 0.40 | 12 | 2.0 | NCF625 | 0.9 | 5.0 | 1.32 | 83 | 9 | 384 | 161 | 0.2 | 0.07 | Comparative Example |
| 19 | 3.0 | 0.40 | 12 | 2.0 | NCF625 | 0.9 | 6.0 | 1.59 | 62 | 92 | 221 | 185 | 0.2 | 0.07 | Invention Example |
| 20 | 3.0 | 0.40 | 12 | 1.6 | NCF625 | 0.9 | 7.0 | 2.32 | 55 | 97 | 207 | 178 | 0.4 | 0.13 | Invention Example |
| 21 | 3.0 | 0.40 | 12 | 1.6 | NCF625 | 0.9 | 8.0 | 2.65 | 43 | 99 | 187 | 156 | 0.7 | 0.23 | Comparative Example |

### Example 2

Hot-rolled sheets each having a thickness in the range of 2.0 to 2.2 mm and containing 3.0 to 3.5 mass% Si were butt-welded by butting the rear end of the preceding hot-rolled steel sheet and the front end of the succeeding hot-rolled steel sheet using a laser welding machine shown in FIG. 1 at the entry side of a continuous rolling line. The steel sheet including the resulting weld was then cold-rolled. In this case, four conditions were applied to the laser welding; a conventional laser welding method described in No. 5 (Comparative Example) of Table 1 in Example 1; a laser welding method described in No. 2 (Comparative Example) in which the filler wire feeding amount ratio is outside the range of the present invention, and laser welding methods described in No. 4 and No. 9 (Invention Example) in which the filler wire feeding amount ratio is within the range of the present invention. The process experiments were conducted for one month under each condition to compare the rate of fracture occurrence at weld that occurred during cold rolling. Note that when comparing the welding methods under the four conditions, the combination of the thicknesses of the steel sheets, the combination of the steel types (i.e., Si content), and the like were set almost the same among all methods, and the occurrence rate of fracture in each weld was determined from the following expression. The occurrence rate (%) of fracture = (the number of coils that have fractured)/ (the total number of rolled coils) × 100

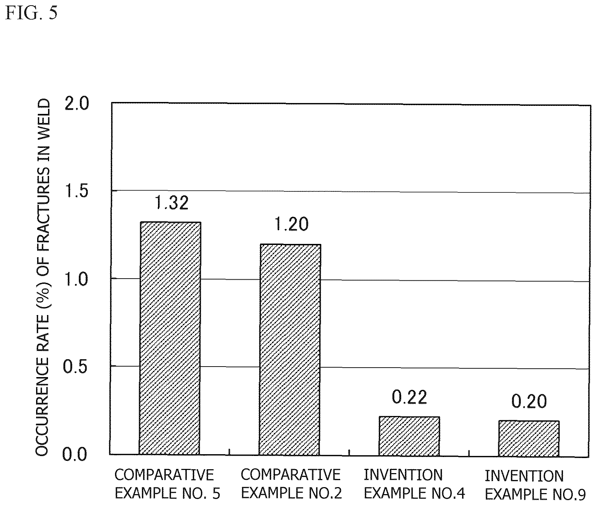

FIG. 5 shows the results. As can be seen from this figure, by applying the laser welding method of the present invention, the occurrence rate of fracture in the weld can be reduced to about 1/6 and about 1/3 that of Comparative Example No. 5 and Comparative Example No. 2, both of which are conventional methods, respectively.

### Industrial Applicability

The method of the present invention is applicable to not only the weld-joining of Si-containing steel sheets but also the weld-joining of other high-alloy steel sheets.

### Reference Signs List

- 1: welding machine
- 2: oscillator
- 3: light guide path
- 4: condenser
- 5: filler wire feeding device
- 6: control unit
- Gi: center gas
- G₂: side gas
- G₃: back gas
- L: laser beam
- M: weld metal
- S₁: preceding steel sheet
- S₂: succeeding steel sheet

## Claims

1. A laser welding method for Si-containing steel sheets, comprising:
butting the Si-containing steel sheets,
feeding a filler wire to a gap between the butted steel sheets while irradiating a laser beam thereto so that the filler wire and the butted steel sheets are melted and solidified to form weld metal,
**characterized in that**
the weld metal has an austenite structure by
using an austenitic wire as the filler wire,
setting a width of the gap to be 0.30 mm or more, and
setting an amount (volume) of the filler wire fed to the gap per unit welding length within a range of 1.5 to 2.5 times a volume of the gap per unit length.

2. The laser welding method for Si-containing steel sheets according to claim 1, wherein
the weld metal has a maximum hardness of 250 or less and a minimum hardness of 150 or more, both in Vickers hardness HV0.2, by setting a base metal dilution ratio of the weld metal to be 70% or less, where the base metal dilution ratio is a volume ratio of the base metal with respect to the entire weld metal.

3. The laser welding method for Si-containing steel sheets according to claim 1 or 2, wherein
a ratio (f/a) of a height f of a bead formed on the back surface of a resulting weld to a thickness a of the steel sheets is set in the range of 0 to 0.20.

4. The laser welding method for Si-containing steel sheets according to any one of claims 1 to 3, wherein
a filler wire having an Ni equivalent of 50% or more and a Cr equivalent of 20% or more on a Sheafflar diagram is used as the filler wire.

5. The laser welding method for Si-containing steel sheets according to claim 4, wherein
the filler wire has an ingredient composition in accordance with NCF625 defined by JIS G 4901.

6. The laser welding method for Si-containing steel sheets according to any one of claims 1 to 5, wherein
the Si-containing steel sheets contain 1.0 mass% or more Si.
